# EUROPÄISCHE PATENTANMELDUNG

(11) **EP 1 186 971 A2**
(43) Veröffentlichungstag der Anmeldung: **13.03.2002**
(21) Anmeldenummer: 01120025.0
(22) Anmeldetag: 20.08.2001
(51) Int. Cl.: G05B 19/042

(54) **Automatisierungssystem und ein Verfahren zur Verarbeitung von Daten im Automatisierungssystem**

(30) Priorität: 31.08.2000 DE 10042955
(71) Anmelder: SIEMENS AKTIENGESELLSCHAFT, 80333 München (DE)
(72) Erfinder: Macher, Andreas, 92318 Neumarkt (DE); Sperl, Wolfgang, 93092 Barbing (DE); Trapp, Lothar, 90537 Feucht (DE); Wagner, Gernot, 91413 Neustadt (DE)

(57) **Zusammenfassung**

Die Erfindung betrifft ein Automatisierungssystem mit Automatisierungsgeräten (1) zur Steuerung und/oder Regelung einer technischen Anlage, die mit Mitteln der elektronischen Datenverarbeitung betrieben werden, wobei im Automatisierungssystem Projektierungsdaten der Anlage zu verarbeiten sind. Es ist ein Speichermedium (2), z. B. eine Memory Card, für die Projektierungsdaten vorhanden, das der jeweiligen zentralen Steuereinheit (CPU) eines Automatisierungsgeräts (1) zugeordnet ist.

## Beschreibung

Die Erfindung betrifft ein Automatisierungssystem, insbesondere mit Automatisierungsgeräten zur Steuerung und/oder Regelung einer technischen Anlage, die mit Mitteln der elektronischen Datenverarbeitung betrieben werden, und ein Verfahren zur Verarbeitung von Daten, beispielsweise von die Anlage betreffenden Projektierungsdaten.

Üblicherweise ist bei den eingangs erwähnten Steuerungs- oder Regelungsprozessen in den Anlagen eine große Anzahl von Informationen über die Konfiguration und die Funktionsweise der Anlage vorhanden, die in einer entsprechend aufgearbeiteten Form für die Datenverarbeitung im Automatisierungssystem zur Verfügung stehen sollten. Aufgrund der Menge der Daten ist jedoch oft keine oder nur eine eingeschränkte Ablage dieser Projektierungsdaten, d. h. sämtlicher Daten, die zur Projektierung einer Anlage notwendig sind, auf dem jeweiligen Automatisierungsgerät möglich. Um diese Daten dennoch verwertbar zu machen, können diese in heute üblicher Weise beispielsweise auf transportablen Datenträgern wie Disketten oder auf vergleichbaren Medien bei dem jeweiligen Automatisierungsgerät abgelegt werden, was jedoch sehr störungsanfällig ist. Weiterhin ist es auch möglich, diese Daten jeweils auf jedes für den Anlagen-Service benötigte Programmiergerät abzulegen, was in der Regel sehr aufwendig ist.

Der Erfindung liegt daher die Aufgabe zugrunde, ein Automatisierungssystem und ein Verfahren zur Verarbeitung von Daten im Automatisierungssystem nach der eingangs genannten Art so fortzubilden, dass eine einfache Verarbeitung von Projektierungsdaten der technischen Anlage möglich ist.

Gemäß der Erfindung ist in vorteilhafter Weise ein Automatisierungssystem mit Automatisierungsgeräten zur Steuerung und/oder Regelung einer technischen Anlage, die mit Mitteln der elektronischen Datenverarbeitung betrieben werden, so ausgebildet, dass ein Speichermedium, z. B. eine Memory Card, für Projektierungsdaten vorhanden ist, das der jeweiligen zentralen Steuereinheit (CPU) eines Automatisierungsgeräts zugeordnet ist und in dem sämtliche Daten, die zur Projektierung einer Anlage notwendig sind, abrufbar sind.

Das erfindungsgemäße Automatisierungssystem ist vor allem deswegen vorteilhaft, da mit der Auslieferung des Systems die zugehörige Projektierungsinformation der Anlage auf einer CPU vorliegt und somit zu jeder Zeit von einem beliebigen Programmiergerät mit dem vollen Komfort des Projektierungs-Werkzeugs am Automatisierungssystem verwendet werden kann. Die kompletten Projektierungsinformationen, d. h. die Daten, die dem Projekteur nach dem Stand der Technik z. B. nur auf dem Programmiergerät zur Verfügung stehen, werden dabei auf einfache Weise im Speichermedium der CPU zentral abgelegt.

Dazu kann die Information in an sich bekannter Weise komprimiert und gestückelt werden und entweder auf die Memory Card im Programmiergerät geschrieben werden, die dann in die CPU gesteckt wird, oder direkt auf die Memory Card in der CPU online übertragen werden. Der Projekteur kann sich somit jederzeit mit dieser CPU verbinden, die Daten wiederum ins Programmiergerät laden und mit dem vollen Komfort der Projektierungsoberfläche Änderungen durchführen und diese Änderungen wieder auf die CPU bringen. Die gestückelten Blöcke der Daten sind dabei so beschaffen, dass sie keinen Einfluss auf den normalen Betrieb der CPU haben.

Bei einem erfindungsgemäßen Verfahren der eingangs angegebenen Art werden somit die Projektierungsdaten in vorteilhafter Weise auf das Speichermedium für die Projektierungsdaten geschrieben, das der jeweiligen zentralen Steuereinheit (CPU) eines Automatisierungsgeräts zugeordnet ist. Eine Memory Card als Speichermedium kann somit auf einfache Weise in ein entsprechendes Schreib-/Lesegerät im Automatisierungsgerät eingeführt werden oder die Projektierungsdaten können mittels einer Datenübertragung auf das Speichermedium geschrieben werden, welches sich bereits im Automatisierungsgerät befindet.

Bei einem Programmiergerät, auf dem die Projektierungsdaten nicht zur Verfügung stehen, können diese Daten auch auf einfache Weise aus dem Speichermedium gelesen werden, welches sich im entsprechenden Schreib-/Lesegerät im Automatisierungsgerät befindet. Der Projekteur kann so mit einem Programmiergerät, auf dem die Projektierungsinformation der Anlage nicht vorhanden ist, direkt an die Anlage gehen und hat durch einen Upload sofort die komplette Projektierungsinformation zur Verfügung, wobei auch Änderungsabgleiche möglich sind.

In vorteilhafter Weise kann auch ein Software-Modul zur Durchführung eines der vorgenannten Verfahren aufgebaut werden, bei dem Programmschritte vorhanden sind, mit denen im Programmiergerät die Projektierungsdaten auf ein Speichermedium für die Projektierungsdaten geschrieben oder gelesen werden können.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

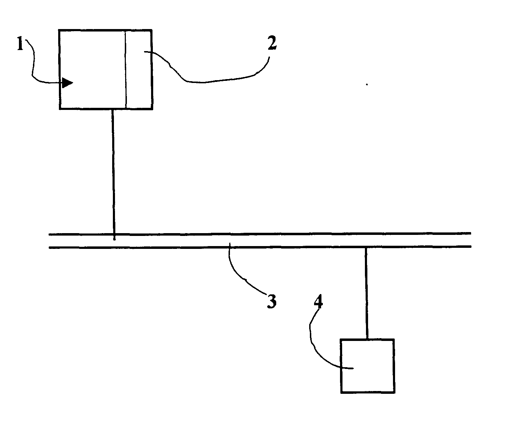

Die Erfindung wird anhand des in der einzigen Figur der Zeichnung dargestellten Ausführungsbeispiels erläutert.

In der Figur ist beispielhaft ein Ausschnitt aus einem Automatisierungssystem gezeigt, das ein Automatisierungsgerät 1 aufweist, wobei das gesamte Automatisierungssystem zur Steuerung und/oder Regelung einer hier nicht dargestellten technischen Anlage mit Mitteln der elektronischen Datenverarbeitung geeignet ist.

Das Automatisierungsgerät 1 weist ein Speichermedium 2, z. B. eine Memory Card in einem entsprechenden Schreib-/Lesegerät, auf, in dem Projektierungsdaten der technischen Anlage gespeichert werden können. Das Speichermedium 2 ist der jeweiligen zentralen Steuereinheit (CPU) des Automatisierungsgeräts 1 zugeordnet, so dass sämtliche Daten, die zur Projektierung der Anlage notwendig sind, direkt abrufbar sind.

Das dargestellte Ausführungsbeispiel des Automatisierungssystems enthält schon mit der Auslieferung des Systems die zugehörigen Projektierungsinformationen der Anlage auf der CPU, so dass über einen Bus 3 zu jeder Zeit von einem beliebigen Programmiergerät 4 von dem Projekteur der Anlage die kompletten Projektierungsinformationen abgerufen werden können.

## Patentansprüche

1. Automatisierungssystem mit Automatisierungsgeräten (1) zur Steuerung und/oder Regelung einer technischen Anlage, die mit Mitteln der elektronischen Datenverarbeitung betrieben werden, wobei im Automatisierungssystem Projektierungsdaten der Anlage zu verarbeiten sind, **dadurch gekennzeichnet, dass** ein Speichermedium (2) für die Projektierungsdaten vorhanden ist, das der jeweiligen zentralen Steuereinheit (CPU) eines Automatisierungsgeräts (1) zugeordnet ist.

2. Automatisierungssystem nach Anspruch 1, **dadurch gekennzeichnet, dass** das Speichermedium (2) eine Memory Card ist, die in ein entsprechendes Schreib-/Lesegerät im Automatisierungsgerät (1) einführbar ist.

3. Automatisierungssystem nach Anspruch 1 oder 2, **dadurch gekennzeichnet, dass** die Projektierungsdaten im Speichermedium (2) komprimiert und/oder in Blöcken gestückelt sind.

4. Verfahren zur Bedienung eines Automatisierungssystems mit Automatisierungsgeräten (1) zur Steuerung und/oder Regelung einer technischen Anlage, die mit Mitteln der elektronischen Datenverarbeitung gesteuert werden, wobei im Automatisierungssystem Projektierungsdaten der Anlage verarbeitet werden, **dadurch gekennzeichnet, dass** die Projektierungsdaten auf ein Speichermedium (2) für die Projektierungsdaten geschrieben werden, das der jeweiligen zentralen Steuereinheit (CPU) eines Automatisierungsgeräts (1) zugeordnet ist.

5. Verfahren nach Anspruch 4, **dadurch gekennzeichnet, dass** die Projektierungsdaten vor der Abspeicherung im Speichermedium (2) komprimiert und/oder in Blöcken gestückelt werden und anschließend in einem Programmiergerät (4) auf das Speichermedium (2) geschrieben werden, welches in ein entsprechendes Schreib-/Lesegerät im Automatisierungsgerät (1) eingeführt wird.

6. Verfahren nach Anspruch 4, **dadurch gekennzeichnet, dass** die Projektierungsdaten vor der Abspeicherung im Speichermedium (2) komprimiert und/oder in Blöcken gestückelt werden und anschließend mittels einer Datenübertragung auf das Speichermedium (2) geschrieben werden, welches sich im Automatisierungsgerät (1) befindet.

7. Verfahren nach Anspruch 4, **dadurch gekennzeichnet, dass** bei einem Programmiergerät (4), auf dem die Projektierungsdaten nicht zur Verfügung stehen, diese Daten aus dem Speichermedium (2) gelesen werden, welches sich in einem entsprechenden Schreib-/Lesegerät im Automatisierungsgerät (1) befindet.

8. Software-Modul zur Durchführung eines Verfahrens nach einem der Ansprüche 4 bis 7, **dadurch gekennzeichnet, dass** das Software-Modul Programmschritte aufweist, mit denen im Programmiergerät die Projektierungsdaten auf ein Speichermedium (2) für die Projektierungsdaten geschrieben oder gelesen werden, und dass in der jeweiligen zentralen Steuereinheit (CPU) eines der Automatisierungsgeräte (1) diese Projektierungsdaten verarbeitet werden.
